(19) Europäisches Patentamt
European Patent Office
Office européen des brevets

(11) Veröffentlichungsnummer : **0 337 414 B1**

(12) **EUROPÄISCHE PATENTSCHRIFT**

(45) Veröffentlichungstag der Patentschrift :
18.09.91 Patentblatt 91/38

(51) Int. Cl.⁵ : **F16L 3/00, F16L 3/02**

(21) Anmeldenummer : **89106466.9**

(22) Anmeldetag : **12.04.89**

(54) **Lager für Rohr-Verteilerbatterien.**

(30) Priorität : **14.04.88 DE 8804883 U**

(43) Veröffentlichungstag der Anmeldung :
**18.10.89 Patentblatt 89/42**

(45) Bekanntmachung des Hinweises auf die
Patenterteilung :
**18.09.91 Patentblatt 91/38**

(84) Benannte Vertragsstaaten :
**AT CH DE ES FR GB IT LI NL**

(56) Entgegenhaltungen :
**DD-A- 118 158**
**DD-A- 246 815**
**DE-A- 3 406 955**
**FR-A- 2 470 322**
**US-A- 4 403 759**

(73) Patentinhaber : **Müller, Franz**
**Eichelhäherstrasse 1**
**W-6200 Wiesbaden (DE)**

(72) Erfinder : **Müller, Franz**
**Eichelhäherstrasse 1**
**W-6200 Wiesbaden (DE)**

(74) Vertreter : **Jochem, Bernd, Dipl.-Wirtsch.-Ing.**
**et al**
**Patentanwälte Beyer & Jochem Postfach 17 01**
**45 Staufenstrasse 36**
**W-6000 Frankfurt/Main 1 (DE)**

EP 0 337 414 B1

## Beschreibung

Die Erfindung betrifft ein Rohrlager für Verteilerbatterien, bestehend aus einer vertikal aufstellbaren Stütze, die an ihrem unteren Ende befestigbar ist und an ihrem oberen Ende einen Hohlraum aufweist, in welchem durch Einbettung in elastomeres Material (18) der Fußteil eines Tragkörpers für ein Rohr horizontal elastisch gelagert ist.

Bisher gibt es für Rohr-Verteilerbatterien keine speziellen Lager. Man verwendet, soweit möglich, Rohrschellen und arbeitet mit Sonderanfertigungen. Auch die Befestigung an einer Wand mittels einer Konsole ist gebräuchlich. So ist z.B. aus der DE-A1-3406955 eine Rohrhalterung bekannt, welche mittels Klemmbacken an einem horizontalen Profilträger befestigbar ist. Eine Klemmbacke hat eine mit gut gleitfähigem Material ausgekleidete Führungsnut, in der ein Fußteil einer Rohrschellenhälfte in Längsrichtung des zu haltenden Rohrs verschieblich geführt ist. Zwischen der Rohrschelle und dem Rohr kann eine Zwischenlage aus Kunststoff eingelegt werden. Das Rohr wird durch einen mit der Rohrschelle zu verschraubenden, U-förmigen Bügel aus dieser festgespannt.

Die vorstehend geschilderte bekannte Rohrhalterung eignet sich nicht zur festen, aber schallgeschützten Lagerung von Rohren unterschiedlichen Durchmessers in unterschiedlicher Höhe über verschiedenen tragenden Flächen. Wenn sich einer dieser Parameter ändert, müssen auch Teile der Rohrhalterung ausgewechselt werden.

Noch weniger anpassungsfähig ist ein aus der DD-A1-246815 bekanntes Rohrlager der eingangs genannten Art, bei dem der Tragkörper in Form eines unten geschlossenen Rohrstutzens mit dem zu lagernden Rohr verschweißt und auf einer Grundplatte abgestützt ist, die auf ihrer Unterseite mit in Beton einzugießenden Ankern und auf ihrer Oberseite mit einer den Rohrstutzen umgebenden Buchse verbunden ist, wobei der Zwischenraum mit einem dauerelastischen Material ausgegossen ist, welches eine gewisse Beweglichkeit ermöglicht, aber die unmittelbare Überleitung des Schalls vom Tragkörper auf die Grundplatte nicht verhindert.

Der Erfindung liegt daher die Aufgabe zugrunde, ein für eine Vielzahl unterschiedlicher Anwendungsfälle geeignetes Lager mit integrierter Schalldämmung für Verteilerbatterien zu schaffen, und diese Aufgabe wird erfindungsgemäß dadurch gelöst, daß der Fußteil des Tragkörpers durch die Einbettung in elastomeres Material auch vertikal elastisch gelagert ist, die stab- oder rohrförmige Stüze an ihrem unteren Ende einen Befestigungsflansch aufweist und der obere Teil des Tragkörpers als V-förmige Gabel ausgebildet ist, auf welcher ein aufgelegtes Rohr abstützbar und durch ein seine obere Hälfte umschlingendes Spannelement festlegbar ist.

Die stab- oder rohrförmige Stütze läßt sich durch Auswechslung von Rohrstücken, Anfügen von Verlängerungs-Rohrstücken oder stufenlose Verstellung mehrerer mit Schraubeingriff verbundener Rohrstücke bzw. Stäbe in sehr einfacher Weise in der Höhe anpassen. Auf den gabelförmigen Tragkörper können Verteilerrohre mit sehr unterschiedlichem Durchmesser aufgelegt werden. Stütze und Gabel sind schmale Bauteile, für die sich immer genug Platz bietet. Normalerweise wird man zwei oder mehr erfindungsgemäße Lager zum Abstützen einer Verteilerbatterie verwenden. Die Gabelarme brauchen auch nicht mit abzweigenden Rohren zu kollidieren, da sie einen verhältnismässig großen Scheitelwinkel von z.B. 120° und mehr einschließen und auch bei großen Rohrdurchmessern verhältnismäßig kurz sein können.

Um Verteilerrohre unterschiedlichen Kalibers auf dem gabelförmigen Tragkörper einfach und schnell fixieren zu können, haben in bevorzugter Ausgestaltung der Erfindung seine Gabelarme einen senkrechten, sich quer zum Rohr erstreckenden Schlitz, und der Tragkörper weist unter den Auflegestellen für das Rohr einen sich ebenfalls quer zum Rohr erstreckenden Querbalken auf, an welchem die Enden eines Spannbands, —drahts oder -bügels festlegbar sind. Der Querbalken kann einstückig am Tragkörper angeformt sein. Vorgezogen wird jedoch eine Ausführung, bei welcher der Querbalken ein Einzelteil ist, welches in einer Durchbrechung im Hauptteil des Tragkörpers sitzt. In diesem Fall kann je nach Rohrdurchmesser ein entsprechend lang gewählter Querbalken eingesetzt werden. Auch dieser hat ebenso wie die Gabelarme einen senkrechten Schlitz, durch den die Enden des Spannbands gezogen werden.

Eine elastische, aber zuverlässig haltende Verankerung des Tragkörpers im elastomeren Material am oberen Ende der Stütze wird in bevorzugter praktischer Ausführung dadurch erhalten, daß der Rand der Öffnung des elastomeres Material enthaltenden Hohlraums den Rand der Fußplatte des Tragkörpers übergreift.

Ein Ausführungsbeispiel der Erfindung wird nachstehend anhand der Zeichnung näher erläutert. Es zeigen :

Fig. 1     einen senkrechten Schnitt durch den oberen Teil eines Lagers für Rohr-Verteilerbatterien ;

Fig. 2     eine Seitenansicht des einen Teil des Lagers nach Fig. 1 bildenden gabelförmigen Tragkörpers für die Verteilerbatterie ;

Fig. 3     einen Querschnitt nach Schnittlinie III-III in Fig. 2 ;

Fig. 4     eine Draufsicht auf den einen Teil des Lagers nach Fig. 1 bildenden Querbalken als Einzelteil.

Das in der Zeichnung gezeigte Lager für Verteilerbatterien besteht im unteren Teil aus einer rohr- oder stabförmigen Stütze 10. Diese kann aus mehreren rohr- oder stabförmigen Abschnitten zusammengesetzt sein und hat am unteren Ende einen nicht gezeigten Befestigungsflansch mit Löchern, der z.B. auf dem Boden oder einer Konsole aufgesetzt und festgeschraubt werden kann.

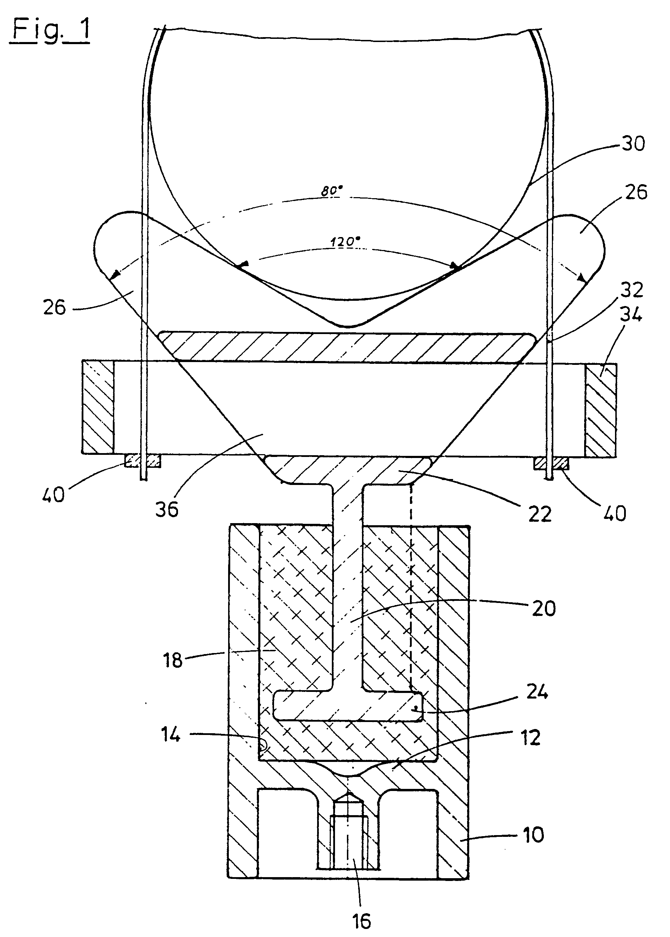

Im Beispielsfall zeigt Fig. 1 nur einen einzigen, nämlich den obersten rohrförmigen Abschnitt einer Stütze. Dieser Rohrabschnitt hat eine Querwand 12, die einen Hohlraum 14 am obersten Ende der Stütze 10 von dem sich nach unten anschließenden Rohrabschnitt trennt. Ein in zentraler Lage an der Unterseite der Querwand 12 angeformter Ansatz enthält eine Gewindebohrung 16, mit deren Hilfe entweder der gezeigte oberste Rohrabschnitt auf einem tragenden Gewindebolzen befestigt oder durch einen Spannbolzen mit einem sich nach unten anschließenden Rohrabschnitt verspannt werden kann, der z.B. mit seiner oberen Stirnfläche an der Unterseite der Querwand 12 anliegt und mit einer Boden- und Flanschplatte eine Abstützung für den in die Gewindebohrung 16 einschraubbaren Spannbolzen bietet. In diesem Fall kann durch einfaches Ablängen des nicht gezeigten unteren Rohrabschnitts die Höhe der Stütze 10 variiert werden. Der untere Rohrabschnitt paßt zweckmäßigerweise mit seinem Außendurchmesser zum Innendurchmesser des in Fig. 1 gezeigten obersten Rohrabschnitts.

Es versteht sich, daß zahlreiche weitere Konstruktionen für die rohr- oder stabförmige Stütze 10 möglich sind. So kann z.B. eine Querwand 12 zwischen zwei Rohrabschnitte eingeschweißt oder der oberste Rohrabschnitt mit der Querwand 12 und dem inneren Hohlraum 14 an dem sich anschließenden Teil der Stütze angeschweißt werden. Außerdem können Rohre mit Gewindeabschnitten miteinander verschraubt werden, wobei sich die Möglichkeit einer stufenlosen Verstellung der Höhe der Stütze ergibt.

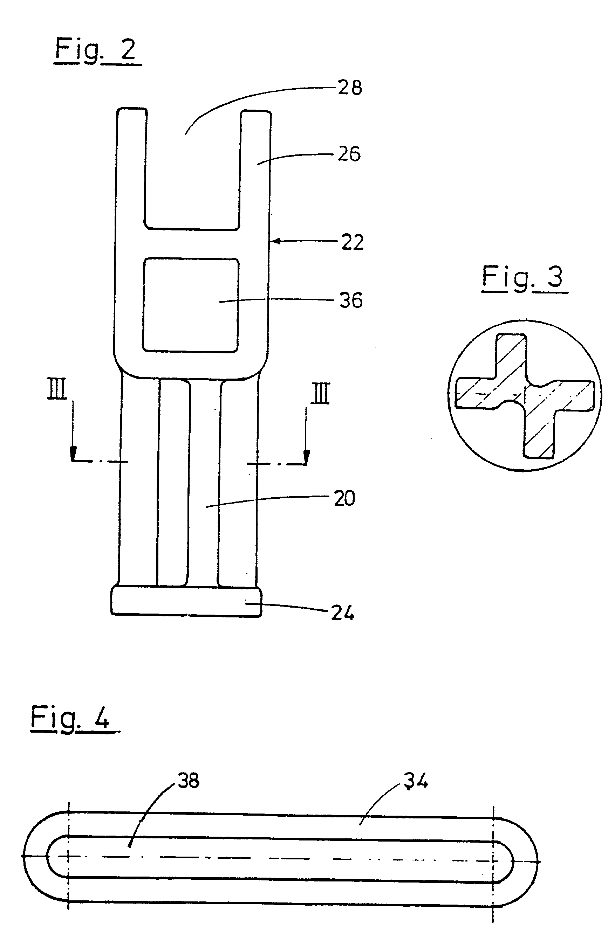

Der obere Hohlraum 14 der Stütze 10 enthält ein darin fest sitzendes elastomeres Material 18. Es umschließt allseitig den Fußteil 20 eines im oberen Bereich gabelförmigen Tragkörpers 22. Der gemäß Fig 3 im Querschnitt im wesentlichen kreuzförmige Schaft des Fußteils 20 geht an seinem unteren Ende über in eine Fußplatte 24. Um den Tragkörper 22 noch besser in dem elastomeren Material 18, z.B. Polyurethan, im Hohlraum 14 zu verankern, kann der Hohlraum 14 am oberen Ende durch eine nicht gezeigte, fest mit der Rohrwand verbundene Abdeckung mit einer mittleren Öffnung begrenzt sein, die mit Bezug auf die Fußplatte 24 derart bemessen ist, daß sie diese im fertig montierten Zustand übergreift, aber das Einführen der Fußplatte 24 in einer Schräglage oder in einer anderen relativen Drehwinkelstellung mit Bezug auf die rohr förmige Stütze 10 gestattet.

Wie sich aus Fig. 1 in Verbindung mit Fig. 2 ergibt, sind die mit 26 bezeichneten Gabelarme des Tragkörpers 22 mit einem mittleren, senkrechten Schlitz 28 geformt. Auf die Gabelarme 26 wird das zu lagernde, in Fig. 1 bei 30 angedeutete Verteilerrohr aufgelegt. Um es in seiner Lage zu sichern bzw. gegen den Tragkörper 22 festzuspannen, wird ein Spannband, Spanndraht oder Spannbügel 32 benutzt. Dieses Spannelement, welches sich vorzugsweise dem jeweiligen Durchmesser des Rohrs 30 anpaßt und im gespannten Zustand gemäß Fig. 1 an dessen oberer Hälfte anliegt, kann sich, je nach Rohrdurchmesser, durch den senkrechten Schlitz 28 in den Gabelarmen 26 erstrecken und unterhalb der Gabelarme 26 mit seinen beiden Enden unter Spannung an einem Querbalken 34 befestigt werden. Letzterer sitzt in einem Durchbruch 36 des Tragkörpers 22 unmittelbar unter dem senkrechten Schlitz 28 in den Gabelarmen 26 und hat in Draufsicht die aus Fig. 4 ersichtliche Form mit einem senkrechten Längsschlitz 38. Die Enden des Spannelements 32 erstrecken sich durch den Längsschlitz 38 und sind je nach Ausführung des Spannelements 32 durch an der Unterseite des Querbalkens 34 anliegende Muttern, Klemmstücke oder andere Befestigungsmittel 40 gehalten.

In einer abgewandelten Ausführungsform kann der Querbalken 34 z.B. auch aus zwei Flachprofilen bestehen, die in paralleler Lage mit dazwischen gesetzten Endstücken verschweißt sind, so daß der Zwischenraum den Längsschlitz 38 bildet. Bei Bedarf kann im Falle wesentlich größerer Durchmesser des zu haltenden Rohrs 30 statt eines bei kleineren Rohrdurchmessern verwendeten kürzeren Querbalkens 34 ein längerer Querbalken gleichen Querschnitts in die Durchbrechung 36 eingesetzt werden.

Die rohr- oder stabförmige Stütze 10, den Tragkörper 22 und den Querbalken 34 wird man vorzugsweise aus Metall, ggf. aber auch Kunststoff herstellen. Es versteht sich, daß im Rahmen der Schutzansprüche je nach Material, Herstellungsverfahren und Anwendungsbereich die zweckmäßigsten Formen von denen des gewählten Ausführungsbeispiels abweichen können, ohne das erfindungsgemäße Prinzip zu verlassen.

## Patentansprüche

1. Rohrlager für Verteilerbatterien, bestehend aus einer vertikal aufstellbaren Stütze (10), die an ihrem unteren Ende befestigbar ist und an ihrem oberen Ende einen Hohlraum (14) aufweist, in welchem durch Einbettung in elastomeres Material (18) der Fußteil (20, 24) eines Tragkörpers (22) für ein Rohr horizontal elastisch gelagert ist, **dadurch gekennzeichnet,** daß der Fußteil (20, 24) des Tragkörpers (22) durch die Einbettung in elastomeres Material (18) auch vertikal elastisch gelagert ist, die stab- oder rohrförmige Stüze an ihrem unteren Ende einen Befestigungsflansch aufweist und der obere Teil des Tragkörpers (22) als V-förmige Gabel (26) ausgebildet ist, auf welcher ein aufgelegtes Rohr (30) abstützbar und durch ein seine obere Hälfte umschlingendes Spannelement (32) festlegbar ist.

2. Rohrlager nach Anspruch 1, **dadurch gekennzeichnet,** daß die Stütze (10) aus mehreren Teilen besteht und durch Gewindeeingriff ihrer Teile in der Länge stufenlos verstellbar ist.

3. Rohrlager nach Anspruch 1 oder 2, **dadurch gekennzeichnet,** daß der Fußteil (20) des Tragkörpers (22) aus einem Schaft mit einer Fußplatte (24) am unteren Ende besteht.

4. Rohrlager nach einem der Ansprüche 1 bis 3, **dadurch gekennzeichnet,** daß die Gabelarme (26) des Tragkörpers (22) quer zum Rohr (30) geschlitzt sind und der Tragkörper unter den Auflegestellen für das Rohr (30) einen sich quer zum Rohr erstreckenden Querbalken (34) aufweist, an welchem die Enden des Spannelements (32) festlegbar sind.

5. Rohrlager nach Anspruch 4, **dadurch gekennzeichnet,** daß der Querbalken (34) einen Längsschlitz (38) hat.

6. Lager nach Anspruch 4 oder 5, **dadurch** gekennzeichnet, daß der Querbalken (34) ein Einzelteil ist, welches in einer Durchbrechung (36) im Hauptteil des Tragkörpers (22) sitzt.

7. Lager nach einem der vorhergehenden Ansprüche, **dadurch gekennzeichnet,** daß der Rand der Öffnung des elastomeres Material (18) enthaltenden Hohlraums (14) den Rand der Fußplatte (24) des Tragkörpers (22) übergreift.

## Claims

1. A pipe mounting for distributor sets, comprising a vertically installed support (10) which can be secured at its lower end and which at its upper end has a cavity (14) in which, by being embedded in elastomeric material (18), the base part (20, 24) of a carrier member (22) for a pipe is horizontally elastically mounted, characterised in that the base part (20, 24) of the carrier member (22) is also vertically elastically mounted by being embedded in elastomeric material, the rod or tube-shaped support has a securing flange at its lower end and the upper part of the carrier member (22) is in the form of a V-shaped fork (26) on which an installed pipe (30) can be supported and can be secured by a clamping member (32) looped around its upper half.

2. A pipe mounting according to Claim 1, characterised in that the support (10) comprises a plurality of parts and can be steplessly adjusted in length by threaded engagement of its parts.

3. A pipe mounting according to Claim 1 or 2, characterised in that the base part (20) of the carrier member (22) comprises a shank with a base plate (24) at its lower end.

4. A pipe mounting according to any one of Claims 1 to 3, characterised in that the fork arms (26) of the carrier member (22) are slotted transversely to the pipe (30) and under the installation locations for the pipe (30) the carrier member has a cross-beam (34) which extends transversely to the pipe and to which the ends of the clamping member (32) can be secured.

5. A pipe mounting according to Claim 4, characterised in that the cross-beam (34) has a longitudinal slot (38).

6. A mounting according to Claim 4 or 5, characterised in that the cross-beam (34) is a component which is fitted in an opening (36) in the main part of the carrier member (22).

7. A mounting according to any one of the preceding Claims, characterised in that the edge of the orifice of the cavity (14) containing elastomeric material (18) overlaps the edge of the base plate (24) of the carrier member (22).

## Revendications

1. Support de tuyaux de distribution constitué d'un support (10) verticalement réglable qu'on peut fixer à son extrémité inférieure et qui présente une chambre creuse (14) à son extrémité supérieure dans laquelle on loge horizontalement et élastiquement par incorporation dans du matériau élastomère (18) la pièce de pied (20, 24) d'un corps support (22) pour un tuyau, caractérisé en ce qu'on loge aussi verticale élastiquement la pièce de pied (20, 24) du corps support (22) par incorporation dans du matériau élastomère (18), le support de barre ou en forme de tuyau présente à son extrémité inférieure une bride de fixation et la pièce supérieure du corps support (22) est en forme de fourche en V (26) sur laquelle on peut déposer en appui un tuyau (30) et on peut le fixer par un élément tendeur (32) entourant sa moitié supérieure.

2. Support de tuyaux selon la revendication 1, caractérisé en ce que le support (10) est constitué de plusieurs pièces et qu'on peut régler ses pièces par prise filetée en longueur en continu.

3. Support de tuyaux selon la revendication 1 ou 2, caractérisé en ce que la pièce de pied (20) du corps support (22) comprend une tige avec une plaque de pied (24) à l'extrémité inférieure.

4. Support de tuyaux selon l'une des revendications 1 à 3, caractérisé en ce qu'on fend les bras de fourche (26) du corps support (22) transversalement au tuyau (30) et que le corps support, en dessous des positions d'appui du tuyau (30) présente une barre (34) transversale au tuyau, sur laquelle on peut fixer les extrémités de l'élément tendeur (32).

5. Support de tuyaux selon la revendication 4, caractérisé en ce que la barre (34) transversale possède une fente longitudinale (38).

6. Support selon la revendication 4 ou 5, caractérisé en ce que la barre (34) transversale est d'une pièce, qui repose dans un évidement (36) ménagé dans la pièce principale du corps support (22).

7. Support selon l'une des revendications précédentes, caractérisé en ce que le bord de l'orifice de la chambre creuse (14) contenant du matériau élastomère (18) chevauche le bord de la plaque de pied (24) du corps support (22).

Fig. 1

Fig. 2

28

26

22

36

III    III

20

24

Fig. 3

Fig. 4

38    34